# EUROPÄISCHE PATENTSCHRIFT

(11) **EP 0 296 107 B1**
(45) Veröffentlichungstag und Bekanntmachung des Hinweises auf die Patenterteilung: **02.03.1994**
(21) Anmeldenummer: 88810373.6
(22) Anmeldetag: 07.06.1988
(51) Int. Cl.: C09B 67/08, C08K 9/04, C09D 7/12, C09D 11/02

(54) **Mit vernetzter Ethylcellulose beschichtete organische Pigmente**
Organic pigments coated with reticulated ethyl cellulose
Pigments organiques revêtus d'éthyle cellulose réticulée

(30) Priorität: 16.06.1987 CH 2258/87
(43) Veröffentlichungstag der Anmeldung: 21.12.1988
(73) Patentinhaber: CIBA-GEIGY AG, 4002 Basel (CH)
(72) Erfinder: Bugnon, Philippe, Dr., CH-1724 Essert (CH); Medinger, Bernhard, Dr., CH-1711 Giffers (CH)

(56) Entgegenhaltungen:
- CH-A- 397 925
- DE-A- 1 519 069
- US-A- 3 639 133

## Beschreibung

Die vorliegende Erfindung betrifft organische Pigmente, deren Teilchenoberfläche mit einem festhaftenden Ueberzug aus vernetzter Ethylcellulose versehen ist. Sie zeichnen sich durch hervorragende Eigenschaften, insbesondere durch ein sehr gutes rheologisches Verhalten, aus.

Die Beschichtung von Pigmenten mit Kunststoffen, um z.B. ihre Beständigkeit gegenüber Binde- und Lösungsmittel oder gegenüber Hitze zu verbessern oder die Verzugstendenz der damit pigmentierten Kunststoff-Formteile möglichst zu reduzieren ist allgemein bekannt und beispielsweise in den Deutschen Offenlegungschriften 1 519 069 und 2 436 204 beschrieben. Aus dem FR-Patent 1 253 937 ist die Beschichtung von Pigmenten mit Metallsalzen von sauren organischen Verbindungen zur Verbesserung des Glanzes bekannt.

Es ist nun gefunden worden, dass organische Pigmente, deren Teilchenoberfläche mit einem festhaftenden, durchgehenden, hochvernetzten Ethylcelluloseüberzug versehen ist, ganz überraschend gute allgemeine Eigenschaften zeigen und sich insbesondere durch ein sehr gutes rheologisches Verhalten auszeichnen.

Die vorliegende Erfindung betrifft demnach Stoffzusammensetzungen enthaltend ein organisches Pigment, dadurch gekennzeichnet, dass die Teilchenoberfläche des Pigments mit einem festhaftenden, durchgehenden, hochvernetzten Ethylcelluloseüberzug versehen ist.

Der hochvernetzte Ethylcelluloseüberzug wird durch Umsetzung der zuvor aufgetragenen Ethylcelluloseschicht mit einem üblichen Vernetzer erhalten.

Im folgenden seien einige Beispiele von geeigneten Vernetzern angegeben:
Besonders geeignete Vernetzer sind Ester der Formel

Q(OR)₄,

worin Q Sn, Si, Pb, Ge, Ti oder Zr und R C₁-C₄-Alkyl bedeuten. Q ist bevorzugt Si, Ti oder Zr. R bedeutet als C₁-C₄-Alkyl z.B. Methyl, Ethyl, n-Propyl, Isopropyl, n-Butyl, sec.-Butyl oder tert.-Butyl und ist bevorzugt Ethyl, n-Propyl, Isopropyl oder n-Butyl. Auch anorganische Verbindungen von Zr, Ti und Sn, wie z.B. ZrOCl₂, TiOSO₄ und SnCl₄, können zweckmässig eingesetzt werden.

Von besonderem Interesse sind auch Verbindungen des Bors, wie Borsäure und ihre Salze, insbesondere Alkalimetallsalze von Polyborsäuren, wie z.B. Natrium- und Kaliumtetraborat, sowie Aluminiumverbindungen der Formeln

Al(NO₃)₃, Al₂(SO₄)₃ oder MeAl(SO₄)₂,

worin Me K oder Na bedeuten. Bevorzugt sind Borsäure, Natriumtetraborat, Aluminiumnitrat und -sulfat.

Im Prinzip ist auch jegliche Verbindung, die eine Aldehydgruppe enthält als Vernetzer brauchbar. Besonders zweckmässig sind aber Aldehyde der Formeln

R¹CHO oder OHC-R²-CHO,

worin R₁ Wasserstoff, C₁-C₆-Alkyl oder Phenyl und R² eine direkte Bindung oder eine Gruppe 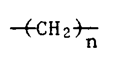
und n eine ganze Zahl zwischen 1 und 4 bedeuten. Als Beispiele seien erwähnt: Formaldehyd, Acetaldehyd, Propionaldehyd, n-Butyraldehyd, Isobutyraldehyd, n-Valeraldehyd, Isovaleraldehyd, n-Caproaldehyd, n-Heptaldehyd, Benzaldehyd, Glyoxal, Succinaldehyd, Glutaraldehyd und Adipaldehyd. Bevorzugt sind Formaldehyd und Glyoxal.

Sehr gut eignen sich als Vernetzer auch C₂-C₈-Dicarbonsäuredihalogenide, wie z.B. Oxalsäure-, Malonsäure-, Bernsteinsäure-, Glutarsäure-, Adipinsäure- oder Phthalsäuredihalogenide, sowie C₁-C₆-Dihalogenalkane, wie z.B. Methylen-, Ethylen-, Ethyliden-, Trimethylen-, Tetramethylen-, Pentamethylen- und Hexamethylenhalogenide. Als Halogenide kommen bevorzugt Bromide oder insbesondere Chloride in Frage.

Die wie oben beschrieben mit einem durchgehenden, hochvernetzten Ethylcelluloseüberzug belegte Teilchenoberfläche des Pigments kann zusätzlich noch mit einem festhaftenden, durchgehenden Ueberzug aus Silicium- und/oder Aluminiumoxid versehen werden.

Die Erfindung betrifft demnach auch Stoffzusammensetzungen, wie die oben beschriebenen, dadurch gekennzeichnet, dass die Teilchenoberfläche des Pigments zusätzlich mit einem festhaftenden, durchgehenden Ueberzug aus Silicium- und/oder Aluminiumoxid versehen ist, welcher durch Polykondensation eines Silikates und/oder Aluminates mit noch freien Hydroxylgruppen der Ethylcellulose fixiert wird.

Im Falle eines Ueberzuges mit Siliciumoxid erfolgt die Polykondensation mit Silicaten über die sogenannte "aktive Kieselsäure", deren Beschaffenheit und Herstellung z.B. in den US-Patenten 3 370 971 und 3 639 133 beschrieben ist. Bevorzugt geht man von handelsüblichem Na-Wasserglas aus.

Im Falle eines Ueberzuges mit Aluminiumoxid erfolgt die Polykondensation über in situ aus einem Aluminat gebildetes Aluminiumoxid. Letzteres kann z.B. direkt aus einem wasserlöslichen Na-, K- oder Mg-Aluminat in Gegenwart von verdünnter Mineralsäure, bei einem pH-Wert zwischen 5 und 10, oder aus wässrigem Aluminiumsulfat, durch Einstellung des pH-Wertes zwischen 5 und 7, erhalten werden.

Bei Verwendung eines Aluminats erhält man bei pH 5-7 dichtes, weitgehend amorphes Aluminiumoxid (sogenanntes "dense alumina") und bei pH 7-10 weitgehend kristallines Aluminiumoxid (sogenanntes "Boehmit").

Es kann auch sowohl eine SiO₂- als auch eine Al₂O₃-abgebende Substanz (ausgewählt aus den oben beschriebenen) oder ein Gemisch von beiden eingesetzt werden und damit ein gemischter Ueberzug aus Silicium- und Aluminiumoxid gebildet werden.

Alle üblichen organischen Pigmente, wie beispielsweise Azopigmente, Chinacridone, Phthalocyanine, Indanthrone, Flavanthrone, Pyranthrone, Perylene, Thioindigo, Dioxazine, Perinone, Chinophthalone und insbesondere Diketo-pyrrolopyrrole, Isoindoline, Isoindolinone und Metallkomplexe, eignen sich zur Herstellung der erfindungsgemässen Stoffzusammensetzungen, die beispielsweise wie nachstehend beschrieben erfolgt.

Das organische Pigment wird nach üblichen Methoden in einem Niederalkylalkohol (z.B. Methyl-, Ethyl-, n-Propyl-, Isopropyl-, n-Butyl-, sec.-Butyl-, tert.-Butyl oder Amylalkohol) dispergiert. Der so erhaltenen Suspension fügt man zweckmässig 1 bis 20, bevorzugt 4 bis 12 Gew.%, bezogen auf das Pigment, Ethylecellulose in Pulverform oder in Lösung zu (wenn gelöst, dann zweckmässig im gleichen Lösungsmittel, in welchem das Pigment dispergiert ist). Das Gemisch wird im allgemeinen mindestens eine Stunde bei Temperaturen zwischen 20 und 50°C gerührt. Dann wird die Suspension unter Rühren auf 50 bis 80°C erwärmt und nach Zugabe des Vernetzers in einer Menge von 10 bis 150, bevorzugt 20 bis 50 Mol %, bezogen auf die Ethylcellulose, 2 bis 8 Stunden weitergerührt. Bei Verwendung von borhaltigen Vernetzern empfiehlt es sich im alkalischen Bereich und bei Verwendung von aldehydgruppenhaltigen Vernetzern im sauren Bereich zu arbeiten. Nach dem Abkühlen wird abfiltriert, mit Wasser gewaschen und bei 80 bis 120°C im Vakuumtrockenschrank getrocknet.

Möchte man die so beschichteten Pigmentteilchen zusätzlich mit einem Silicium- und/oder Aluminiumoxidüberzug versehen, so verfährt man z.B. wie folgt:
Die wie oben beschrieben erhaltene Suspension wird, ohne das Produkt zu isolieren, einfach mit mindestens der gleichen Menge Wasser verdünnt oder aber das isolierte wasserfeuchte Produkt wird in Wasser suspendiert.

Die Suspension wird anschliessend unter Rühren auf 60-100°C erhitzt und mit 0,5-50, bevorzugt 1-25 und besonders bevorzugt 2-12 Gew.-%, bezogen auf das Pigment, aktiver Kieselsäure oder in situ gebildetem Aluminiumoxid versetzt. Es wird 2 bis 4 Stunden weitergerührt, dann neutralisiert und abfiltriert. Der Rückstand wird mit Wasser gewaschen und im Vakuumtrockenschrank bei 80-120°C getrocknet.

Aktive Kieselsäure erhält man beispielsweise dadurch, dass man die auf 60-100°C erwärmte Suspension durch Zugabe einer Base auf pH 7-10 einstellt und dann langsam innerhalb einer Stunde miteinander Na-Wasserglas und Schwefelsäure in der gewünschten Menge zufügt und dabei darauf achtet, dass der pH immer im alkalischen Bereich liegt.

In situ gebildetes Al₂O₃ erhält man z.B. dadurch, dass man in die auf 60-100°C erwärmte Suspension langsam entweder eine Natriumaluminat-Lösung bis zum pH 5-9 zugibt und den pH durch Zugabe von Schwefelsäure konstant hält, oder eine Aluminiumsulfat-Lösung bis zum pH 5-7 hinzufügt, und den pH durch Zugabe einer Base in diesem Bereich hält.

Als Basen zum Einstellen des pH-Wertes kommen zweckmässig anorganische sowie organische Verbindungen, z.B. Natronlauge, Kalilauge, Ammoniak, Natriumalkoholat, Kaliumalkoholat oder Pyridin in Frage.

Die erfindungsgemässen Stoffkompositionen eignen sich als Pigmente zum Färben von hochmolekularem organischem Material.

Hochmolekulare organische Materialien, die mit den erfindungsgemässen Stoffzusammensetzungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Stoffzusammensetzungen als Toner oder in Form von Präparaten einzusetzen. Bezogen auf das zu pigmentierende hochmolekulare organische Material kann man die erfindungsgemässen Stoffzusammensetzungen in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Stoffzusammensetzungen in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Stoffzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie z.B. hohe Transparenz, gute Ueberlackier-, Migrations-, Hitze-, Licht- und Wetterbeständigkeit aus.

Die erfindungsgemässen Stoffzusammensetzungen zeichnen sich aber ganz besonders durch eine hohe Farbstärke, durch ein hervorragendes rheologisches Verhalten in Lack- und Druckfarbensystemen, durch hohen Glanz und ausgezeichnetes "DOI" (=distinctness of image) der damit erhaltenen Lackierungen und durch weitgehende Verzugsfreiheit der damit pigmentierten Kunststoff-Formteile aus.

Infolge der guten rheologischen Eigenschaften der erfindungsgemässen Stoffzusammensetzungen ist es möglich, Lacke hoher Pigmentkonzentration (high loadings) herzustellen.

Die erfindungsgemässen Stoffzusammensetzungen eignen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Die nachfolgenden Beispiele dienen zur Erläuterung der Erfindung. Sofern nichts anderes vermerkt, bedeuten Prozente Gewichtsprozente.

Beispiel 1: 10 g des Isoindoinonpigments C.I. Pigment Gelb 110 werden in 100 ml Isopropanol eingerührt und nach üblicher Methode dispergiert. 100 ml einer 1%igen Ethylcellulose-Lösung in Isopropanol werden zugegeben. Die Suspension wird bei Raumtemperatur zwei Stunden gerührt, bevor die Temperatur auf 80°C erhöht wird. Dann wird ein Gemisch aus 210 mg Tetraethoxysilicat und 25 ml Isopropanol hinzugefügt und 6 Stunden bei 80°C weitergerührt. Nach dem Abkühlen wird das Produkt abfiltriert, mit Isopropanol und Wasser gewaschen und in einem Vakuumtrockenschrank bei 80°C getrocknet.

Beispiel 2: 10 g des Diketo-pyrrolopyrrolpigments C.I. Pigment Rot 255 werden wie in Beispiel 1 beschrieben in 100 ml Isopropanol dispergiert. Innerhalb 5 Minuten werden 100 ml einer 1%igen Ethylcellulose-Lösung in Isopropanol zugegeben. Die Suspension wird 2 1/2 Stunden bei Raumtemperatur gerührt. Innerhalb von 30 Minuten wird eine Mischung aus 300 mg 95%iger Zr-IV-propylat-Lösung in Isopropanol und 50 ml Isopropanol zugegeben. Die Temperatur wird auf 80°C erhöht, und die Suspension wird während 3 Stunden weitergerührt. Nach dem Abkühlen wird das Produkt filtriert, mit Isopropanol und Wasser gewaschen und in einem Vakuumtrockenschrank bei 80°C getrocknet.

Beispiel 3: Beispiel 1 wird wiederholt mit der Ausnahme, dass als Vernetzer anstelle des Tetraethoxysilicat/Isopropanol-Gemisches ein Gemisch aus 740 mg Titan-IV-butylat und 25 ml Isopropanol verwendet wird.

Beispiel 4: Beispiel 1 wird wiederholt mit der Ausnahme, das als Vernetzer anstelle des Tetraethoxysilicat/Isopropanol-Gemisches eine Lösung von 375 mg Al(NO₃)₃·9H₂O in 25 ml Ethanol verwendet wird. Die Suspension wird dabei vor dem Filtrieren neutralisiert.

Beispiel 5: Beispiel 1 wird wiederholt mit der Ausnahme, dass anstelle von C.I. Pigment Gelb 110 die gleiche Menge des Metallkomplexpigments C.I. Pigment Gelb 129 und als Vernetzer anstelle des Tetraethoxysilicat/Isopropanol-Gemisches eine Lösung von 50 mg H₃BO₃ in 50 ml Isopropanol verwendet werden. Der pH der Suspension wird vor dem Rühren bei 80°C durch Zugabe von NaOH auf 8 eingestellt.

Beispiel 6: Beispiel 5 wird wiederholt mit der Ausnahme, dass anstelle der Borsäurelösung in Isopropanol eine Mischung aus 305 mg Na₂B₄O₇·10H₂O in 2 ml Wasser gelöst und 48 ml Isopropanol als Vernetzer verwendet wird.

Beispiel 7: Beispiel 1 wird wiederholt mit der Ausnahme, dass anstelle des Tetraethoxysilicat/Isopropanol-Gemisches eine Mischung aus 171 mg einer 35%igen wässrigen Formaldehydlösung und 60 ml Isopropanol als Vernetzer verwendet wird. Vor dem Rühren bei 80°C wird der pH durch Zugabe von Eisessig auf 4 eingestellt. Vor dem Filtrieren wird die Suspension neutralisiert.

Beispiel 8: Beispiel 7 wird wiederholt mit der Ausnahme, dass anstelle der Formeladehyd/Isopropanol-Mischung eine Lösung von 60 mg Glyoxal in 30 ml Isopropanol als Vernetzer verwendet wird.

Beispiel 9: 58,5 g eines 35,9%igen feuchten Presskuchens des γ-Chinacridonpigmentes C.I. Pigment Violet 19 werden wie in Beispiel 1 beschrieben in 500 ml Isopropanol dispergiert, eine Stunde gerührt und abfiltriert. Der Presskuchen wird erneut in 200 ml Isopropanol dispergiert. 200 ml einer 1%igen Lösung von Ethylcellulose in Isopropanol werden innerhalb von 10 Minuten zugegeben. Die Suspension wird 2 Stunden bei Raumtemperatur gerührt. Die Hälfte der so vorbehandelten Pigmentsuspension wird auf 80°C erhitzt, dann wird ein Gemisch aus 500 mg Tetraethoxysilicat und 20 ml Isopropanol innert 5 Minuten zugefügt. Die Suspension wird noch 3 Stunden unter Rückfluss weitergerührt. Nach dem Abkühlen wird das Produkt filtriert, mit Isopropanol und Wasser gewaschen und in einem Vakuumtrockenschrank bei 80°C getrocknet.

Beispiel 10: 10 g des Isoindolinonpigments CI Pigment Gelb 110 werden in 100 ml einer 1%-igen Ethylcellulose-Lösung in Isopropanol dispergiert. Die Suspension wird bei Raumtemperatur 16 Stunden gerührt, bevor die Temperatur auf 60°C erhöht wird. Dann werden 100 ml Wasser zugegeben. 0,165 g TiOSO₄ in 10 ml Wasser gelöst werden langsam zugegeben und die Suspension 3 Stunden weitergerührt. Nach dem Abkühlen wird das Produkt wie in Beispiel 1 beschrieben isoliert.

Beispiel 11: 10 g CI Pigment Gelb 110 werden in 100 ml einer 1%-igen Ethylcellulose-Lösung in Isopropanol dispergiert. Die Suspension wird bei Raumtemperatur 16 Stunden gerührt, bevor die Temperatur auf 60°C erhöht wird. Dann wird ein Gemisch aus 1,05 g SnCl₄ und 25 ml Isopropanol hinzugefügt und 3 Stunden weitergerührt. Nach dem Abkühlen wird das Produkt abfiltriert, mit Isopropanol und anschliessend mit Wasser neutral gewaschen und in einem Vakuumtrockenschrank bei 80°C getrocknet.

Beispiel 12: 10 g CI Pigment Gelb 110 werden in 100 ml einer 1%-igen Ethylcellulose-Lösung in Isopropanol dispergiert. Die Suspension wird 16 Stunden bei Raumtemperatur gerührt, bevor die Temperatur auf 60°C erhöht wird. Dann wird ein Gemisch aus 1,3 g ZrOCl₂ und 25 ml Wasser und 25 ml Isopropanol langsam hinzugefügt und 3 Stunden weitergerührt. Nach dem Abkühlen wird das Produkt abfiltriert, mit Isopropanol und Wasser neutral gewaschen und getrocknet.

Beispiel 13: 20 g CI Pigment Gelb 110 werden in 200 ml einer 1%-igen Ethylcellulose-Lösung in Isopropanol dispergiert. Die Suspension wird eine Stunde bei Raumtemperatur gerührt, bevor die Temperatur auf 60°C erhöht wird. Innerhalb von 15 Minuten wird eine Mischung aus 1,3 g 95%-iger Zr(IV)-Propylat-Lösung in Isopropanol zugegeben und 4 Stunden weitergerührt.
a) Die eine Hälfte der Suspension wird auf 80°C erwärmt und mit 200 ml Wasser versetzt. Nach Erhöhung des pH-Wertes auf 8,5 durch Zugabe von 1n NaOH werden innerhalb von 40 Minuten gleichzeitig 1,9 g Na-Wasserglas (26 % SiO₂) mit 50 ml Wasser verdünnt und 13 ml einer 0,2 M H₂SO₄-Lösung mit 50 ml Wasser verdünnt hinzugefügt. Der pH bleibt bei 8,5-8,7 konstant. Die Suspension wird dann 3 Stunden weitergerührt. Nach dem Abkühlen wird das Produkt abfiltriert, mit Wasser neutral gewaschen und in einem Trockenschrank bei 80°C getrocknet.
b) Die zweite Hälfte der Suspension wird auf 80°C erwärmt und mit 200 ml Wasser versetzt. Der pH liegt bei 6,5. Innerhalb von 40 Minuten werden gleichzeitig 3,3 g Al₂(SO₄)₃·18H₂O in 50 ml Wasser gelöst und 50 ml einer 0,5 n NaOH-Lösung zugegeben. Der pH bleibt bei ∼6,5 konstant. Die Suspension wird dann 3 Stunden weitergerührt. Das Produkt wird schliesslich wie unter a) beschrieben isoliert.

Beispiel 14 (a,b): Beispiel 13 (a und b) wird wiederholt mit der Ausnahme, dass anstelle der Zr(IV)-Propylat-Lösung eine Mischung aus 130 mg Borsäure in 20 ml Wasser und Isopropanol (1:1) als Vernetzer verwendet wird, wobei der pH auf 8,0 erhöht wird.

Beispiel 15 (a,b): Beispiel 13 (a und b) wird wiederholt mit der Ausnahme, dass anstelle der Zr(IV)-Propylat-Lösung eine Mischung aus 1,3 g Ti(IV)-n-Butylat-Lösung und 20 ml Isopropanol als Vernetzer verwendet wird.

Beispiel 16: Beispiel 1 wird wiederholt mit der Ausnahme, dass anstelle des Tetraethoxysilikat-Gemisches eine Lösung von 310 mg Bernsteinsäuredichlorid in Isopropanol als Vernetzer verwendet wird. Der pH der Suspension wird vor dem Rühren bei 60°C durch Zugabe einer Na-isopropylat-Lösung in Isopropanol leicht alkalisch eingestellt.

Beispiel 17: Beispiel 1 wird wiederholt mit der Ausnahme, dass anstelle der Tetraethoxysilicat-Gemisches eine Lösung von 304 mg Dichlorbutan in 50 ml Isopropanol als Vernetzer verwendet wird. Der pH der Suspension wird vor dem Rühren bei 60°C durch Zugabe einer Na-isopropylat-Lösung in Isopropanol leicht alkalisch eingestellt.

### Anwendungsbeispiele 18 bis 26

Zur Bestimmung des Fliessverhaltens werden die in der nachfolgenden Tabelle angegebenen erfindungsgemässen Stoffzusammensetzungen, sowie die entsprechenden unbehandelten Pigmente nach üblicher Methode in ein Alkyd-Lacksystem (®Setal 84, Kunstharzfabriek Synthesis B.V., Holland; Festkörpergehalt: 70 Gew.%) eingearbeitet.

Das Fliessverhalten der Lackanreibungen, welche 9 % Pigment und 40,5 % Gesamtfestkörper enthalten und deren Pigment/Bindemittel-Verhältnis 0,3 beträgt, wird mit einem HAAKE-Viskosimeter ®Rotovisco RV 12 ermittelt (Messtemperatur: 25°C; Mess-System: SV-SP; Scherbereich: D = 0-100 [l/s]). Zur einfachen Charakterisierung der Fliesskurven können aus optimalen Regressionskurven ermittelte Viskositätswerte bei D = 10 [l/s] und 100 [l/s] angegeben werden.

Niedrigere Werte bedeuten besseres Fliessverhalten.

| Beispiel | Stoffzusammensetzung | Viskositätswerte in mPa·s | |
|---|---|---|---|
| | | bei D=10 [l/s] | bei D=100 [l/s] |
| 18 | C.I. Pigment Gelb 110 + Ethylcellulose + Tetraethoxysilicat (Beispiel 1) | 817 | 151 |
| 19 | C.I. Pigment Rot 255 + Ethylcellulose + Zr-IV-propylat (Beispiel 2) | 269 | 77 |
| 20 | C.I. Pigment Gelb 110 + Ethylcellulose + Ti-IV-butylat (Beispiel 3) | 1045 | 188 |
| 21 | C.I. Pigment Gelb 110 + Ethylcellulose + Al(NO₃)₃ (Beispiel 4) | 984 | 172 |
| 22 | C.I. Pigment Gelb 129 + Ethylcellulose + H₃BO₃ (Beispiel 5) | 581 | 126 |
| 23 | C.I. Pigment Gelb 129 + Ethylcellulose + Na₂B₄O₇ (Beispiel 6) | 633 | 124 |
| 24 | C.I. Pigment Gelb 110 + Ethylcellulose + Formaldehyd (Beispiel 7) | 924 | 183 |
| 25 | C.I. Pigment Gelb 110 + Ethylcellulose + Glyoxal (Beispiel 8) | 811 | 156 |
| 26 | C.I. Pigment Violett 19 + Ethylcellulose + Tetraethoxysilicat (Beispiel 9) | 154 | 45 |

Die entsprechenden unbehandelten Pigmente ergeben die in der nachfolgenden Tabelle angegebenen Viskositätswerte.

| Pigment | Viskositätswerte in mPa·s | |
|---|---|---|
| | bei D=10[l/s] | bei D=100[l/s] |
| C.I.Pigment Gelb 110 | 1320 | 297 |
| C.I.Pigment Gelb 129 | 1628 | 369 |
| C.I.Pigment Rot 255 | 448 | 108 |
| C.I.Pigment Violett 19 | 169 | 54 |

### Anwendungsbeispiele 27 bis 37

Zur Bestimmung des Fliessverhaltens werden die in der nachfolgenden Tabelle angegebenen erfindungsgemässen Stoffzusammensetzungen, sowie die entsprechenden unbehandelten Pigmente nach üblicher Methode in ein Alkyd-Lacksystem (®Setal 84, Kunstharzfabriek Synthesis B.V., Holland; Festkörpergehalt: 70 Gew.%) eingearbeitet.

Das Fliessverhalten der Lackanreibungen, welche 12 % Pigment und 54 % Gesamtfestkörper enthalten und deren Pigment/Bindemittel-Verhältnis 0,3 beträgt, wird mit einem HAAKE-Viskosimeter ®Rotovisco RV 12 ermittelt (Messtemperatur: 25°C; Mess-System: SV-SP; Scherbereich: D = 0-100 (l/s]). Zur einfachen Charakterisierung der Fliesskurven können aus optimalen Regressionskurven ermittelte Viskositätswerte bei D = 10 [l/s] und 100 [l/s] angegeben werden.

Niedrigere Werte bedeuten besseres Fliessverhalten.

| Beispiel | Stoffzusammensetzung | Viskositätswerte in mPa·s | |
|---|---|---|---|
| | | bei D=10 [l/s] | bei D=100 [l/s] |
| 27 | C.I. Pigment Gelb 110 + Ethylcellulose + TiOSO₄ (Beispiel 10) | 1979 | 581 |
| 28 | C.I. Pigment Gelb 110 + Ethylcellulose + SnCl₄ (Beispiel 11) | 2070 | 541 |
| 29 | C.I. Pigment Gelb 110 + Ethylcellulose + ZrOCl₂ (Beispiel 12) | 1897 | 535 |
| 30 | C.I. Pigment Gelb 110 + Ethylcellulose + Zr(Propylat)₄ + SiO₂ (Beisp.13a) | 2435 | 671 |
| 31 | C.I. Pigment Gelb 110 + Ethylcellulose + Zr(Propylat)₄ + Al₂O₃ (Beisp.13b) | 2100 | 635 |
| 32 | C.I. Pigment Gelb 110 + Ethylcellulose + Borsäure + SiO₂ (Beispiel 14a) | 2049 | 559 |
| 33 | C.I. Pigment Gelb 110 + Ethylcellulose + Borsäure + Al₂O₃ (Beispiel 14b) | 2013 | 518 |
| 34 | C.I. Pigment Gelb 110 + Ethylcellulose + Ti(n-Butylat)₄ + SiO₂ (Beisp.15a) | 2309 | 582 |
| 35 | C.I. Pigment Gelb 110 + Ethylcellulose + Ti(n-Butylat)₄ + Al₂O₃ (Beisp.15b) | 2144 | 579 |
| 36 | C.I. Pigment Gelb 110 + Ethylcellulose + Bernsteinsäuredichlorid (Bsp. 16) | 2037 | 543 |
| 37 | C.I. Pigment Gelb 110 + Ethylcellulose + Dichlorbutan (Beispiel 17) | 2463 | 639 |
| Mit dem unbehandelten C.I. Pigment Gelb 110 erhält man folgende Werte: bei D = 10 [l/s]: 3782 mPa·s bei D = 100 [l/s]: 833 mPa·s | | | |

## Patentansprüche

1. Stoffzusammensetzungen enthaltend ein organisches Pigment, dadurch gekennzeichnet, dass die Teilchenoberfläche des Pigments mit einem festhaftenden, durchgehenden, hochvernetzten Ethylcelluloseüberzug versehen ist.

2. Stoffzusammensetzungen gemäss Anspruch 1, daduch gekennzeichnet, dass der hochvernetzte Ethylcelluloseüberzug durch Umsetzung der zuvor aufgetragenen Ethylcelluloseschicht mit einer Verbindung der Formel Q(OR)₄, worin Q Sn, Si, Pb, Ge, Ti oder Zr und R C₁-C₄-Alkyl bedeuten, als Vernetzer erhältlich ist.

3. Stoffzusammensetzungen gemäss Anspruch 1, dadurch gekennzeichnet, dass der hochvernetzte Ethylcelluloseüberzug durch Umsetzung der zuvor aufgetragenen Ethylcelluloseschicht mit einer Verbindung der Formel Q(OR)₄, worin Q Si, Ti oder Zr und R Ethyl, n-Propyl, Isopropyl oder n-Butyl bedeuten, als Vernetzer erhältlich ist.

4. Stoffzusammensetzung gemäss Anspruch 1, dadurch gekennzeichnet, dass der hochvernetzte Ethylcelluloseüberzug durch Umsetzung der zuvor aufgetragenen Ethylcelluloseschicht mit Borsäure oder einem ihrer Salze als Vernetzer erhältlich ist.

5. Stoffzusammensetzung gemäss Anpruch 1, dadurch gekennzeichnet, dass der hochvernetzte Ethylcelluloseüberzug durch Umsetzung der zuvor aufgetragenen Ethylcelluloseschicht mit Borsäure oder Natriumtetraborat als Vernetzer erhältlich ist.

6. Stoffzusammensetzungen gemäss Anspruch 1, dadurch gekennzeichnet, dass der hochvernetzte Ethylcelluloseüberzug durch Umsetzung der zuvor aufgetragenen Ethylcelluloseschicht mit einer Aluminiumverbindung der Formeln Al(NO₃)₃, Al₂(SO₄)₃ oder MeAl(SO₄)₂, worin Me K oder Na bedeuten, als Vernetzer erhältlich ist.

7. Stoffzusammensetzungen gemäss Anspruch 1, dadurch gekennzeichnet, dass der hochvernetzte Ethylcelluloseüberzug durch Umsetzung der zuvor aufgetragenen Ethylcelluloseschicht mit Al(NO₃)₃ oder Al₂(SO₄)₃ als Vernetzer erhältlich ist..

8. Stoffzusammensetzungen gemäss Anspruch 1, dadurch gekennzeichnet, dass der hochvernetzte Ethylcelluloseüberzug durch Umsetzung der zuvor aufgetragenen Ethylcelluloseschicht mit einem Aldehyd der Formel R¹-CHO oder OHC-R²-CHO, worin R¹ Wasserstoff C₁-C₆-Alkyl oder Phenyl und R² eine direkte Bindung oder eine Gruppe 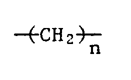 und n eine ganze Zahl zwischen 1 und 4 bedeuten, als Vernetzer erhältlich ist.

9. Stoffzusammensetzungen gemäss Anspruch 1, dadurch gekennzeichnet, dass der hochvernetzte Ethylcelluloseüberzug durch Umsetzung der zuvor aufgetragenen Ethylcelluloseschicht mit Formaldehyd oder Glyoxal als Vernetzer erhältlich ist.

10. Stoffzusammensetzungen gemäss Anspruch 1, dadurch gekennzeichnet, dass der hochvernetzte Ethylcelluloseüberzug durch Umsetzung der zuvor aufgetragenen Ethylcelluloseschicht mit einem C₂-C₈-Dicarbonsäuredihalogenid als Vernetzer erhältlich ist.

11. Stoffzusammensetzungen gemäss Anspruch 1, dadurch gekennzeichnet, dass der hochvernetzte Ethylcelluloseüberzug durch Umsetzung der zuvor aufgetragenen Ethylcelluloseschicht mit einem C₁-C₆-Dihalogenalkan als Vernetzer erhältlich ist.

12. Stoffzusammensetzungen gemäss Anspruch 1, dadurch gekennzeichnet, dass als Pigment ein Diketo-pyrrolopyrrol-, ein Isoindolin-, ein Isoindolinon- oder ein Metallkomplexpigment enthalten ist.

13. Stoffzusammensetzungen gemäss Anspruch 1, dadurch gekennzeichnet, dass die Ethylcellulose in einer Menge von 1 bis 20 Gew.%, bezogen auf das Pigment, enthalten ist.

14. Stoffzusammensetzungen gemäss Anspruch 1, dadurch gekennzeichnet, dass der hochvernetzte Ethylcelluloseüberzug durch Umsetzung der zuvor aufgetragenen Ethylcelluloseschicht mit einem Vernetzer in einer Menge von 10 bis 150 Mol %, bezogen auf die Ethylcellulose, erhältlich ist.

15. Stoffzusammensetzungen gemäss Anspruch 1, dadurch gekennzeichnet, dass die Teilchenoberfläche des Pigments zusätzlich mit einem festhaftenden, durchgehenden Ueberzug aus Silicium- und/oder Aluminiumoxid versehen ist, welcher durch Polykondensation eines Silikates und/oder Aluminates mit noch freien Hydroxygruppen der Ethylcellulose fixiert wird.

16. Hochmolekulares organisches Material enthaltend eine Stoffzusammensetzung gemäss Anspruch 1.

17. Hochmolekulares organisches Material enthaltend eine Stoffzusammensetzung gemäss Anspruch 15.

## Claims

1. A composition containing an organic pigment, wherein the surface of the pigment particles is provided with a tenacious, continuous, highly crosslinked coating of ethylcellulose.

2. A composition according to claim 1, wherein the highly crosslinked coating of ethylcellulose is obtainable by reacting the previously applied layer of ethylcellulose with a compound of formula Q(OR)₄, wherein Q is Sn, Si, Pb, Ge, Ti or Zr and R is C₁-C₄alkyl, as crosslinking agent.

3. A composition according to claim 1, wherein the highly crosslinked coating of ethylcellulose is obtainable by reacting the previously applied layer of ethylcellulose with a compound of formula Q(OR)₄, wherein Q is Si, Ti or Zr and R is ethyl, n-propyl, isopropyl or n-butyl, as crosslinking agent.

4. A composition according to claim 1, wherein the highly crosslinked coating of ethylcellulose is obtainable by reacting the previously applied layer of ethylcellulose with boric acid or a salt thereof as crosslinking agent.

5. A composition according to claim 1, wherein the highly crosslinked coating of ethylcellulose is obtainable by reacting the previously applied layer of ethylcellulose with boric acid or sodium tetraborate as crosslinking agent.

6. A composition according to claim 1, wherein the highly crosslinked coating of ethylcellulose is obtainable by reacting the previously applied layer of ethylcellulose with an aluminium compound of formula Al(NO₃)₃, Al₂(SO₄)₃ or MeAl(SO₄)₂ in which Me is potassium or sodium, as crosslinking agent.

7. A composition according to claim 1, wherein the highly crosslinked coating of ethylcellulose is obtainable by reacting the previously applied layer of ethylcellulose with Al(NO₃)₃ or Al₂(SO₄)₃ as crosslinking agent.

8. A composition according to claim 1, wherein the highly crosslinked coating of ethylcellulose is obtainable by reacting the previously applied layer of ethylcellulose with an aldehyde of formula R¹-CHO or OHC-R²-CHO in which R¹ is hydrogen, C₁-C₆alkyl or phenyl and R² is a direct bond or a (CH₂)ₙ group and n is an integer between 1 and 4, as crosslinking agent.

9. A composition according to claim 1, wherein the highly crosslinked coating of ethylcellulose is obtainable by reacting the previously applied layer of ethylcellulose with formaldehyde or glyoxal as crosslinking agent.

10. A composition according to claim 1, wherein the highly crosslinked coating of ethylcellulose is obtainable by reacting the previously applied layer of ethylcellulose with a dihalide of a C₂-C₈dicarboxylic acid as crosslinking agent.

11. A composition according to claim 1, wherein the highly crosslinked coating of ethylcellulose is obtainable by reacting the previously applied layer of ethylcellulose with a C₁-C₆dihaloalkane.

12. A composition according to claim 1, wherein the pigment is a diketopyrrolopyrrole, isoindoline, isoindolinone or metal complex pigment.

13. A composition according to claim 1, which contains the ethylcellulose in an amount of 1 to 20 % by weight, based on the pigment.

14. A composition according to claim 1, wherein the highly crosslinked coating of ethylcellulose is obtainable by reacting the previously applied layer of ethylcellulose with a crosslinking agent in an amount of 10 to 150 mol%, based on ethylcellulose.

15. A composition according to claim 1, wherein the surface of the pigment particles is additionally provided with a tenacious, continuous coating of silica and/or alumina, which coating is fixed by polycondensing a silicate and/or aluminate with hydroxyl groups of the ethylcellulose which are still free.

16. A high molecular weight organic material containing a composition according to claim 1.

17. A high molecular weight organic material containing a composition according to claim 15.

## Revendications

1. Compositions comprenant un pigment organique, caractérisées en ce que la surface des particules du pigment est pourvue d'un revêtement adhérent d'éthylcellulose fortement réticulée.

2. Compositions selon la revendication 1, caractérisées en ce que le revêtement d'éthylcellulose fortement réticulée est obtenu par réaction de la couche d'éthylcellulose préalablement appliquée avec comme agent réticulant un composé de formule Q(OR)₄, Q désignant Sn, Si, Pb, Ge, Ti ou Zr et R un alkyle en C₁-C₄.

3. Compositions selon la revendication 1, caractérisées en ce que le revêtement d'éthylcellulose fortement réticulée est obtenu par réaction de la couche d'éthylcellulose préalablement appliquée avec comme réticulant un composé de formule Q(OR)₄, Q désignant Si, Ti ou Zr et R le groupe méthyle, éthyle, n-propyle ou isopropyle ou n-butyle.

4. Compositions selon la revendication 1, caractérisées en ce que le revêtement d'éthylcellulose fortement réticulée est obtenu par réaction de la couche d'éthylcellulose préalablement appliquée avec de l'acide borique ou un sel d'acide borique comme réticulant.

5. Compositions selon la revendication 1, caractérisées en ce que le revêtement d'éthylcellulose fortement réticulée est obtenu par réaction de la couche d'éthylcellulose préalablement appliquée avec comme réticulant de l'acide borique ou du tétraborate de sodium.

6. Compositions selon la revendication 1, caractérisées en ce que le revêtement d'éthylcellulose réticulée est obtenu par réaction de la couche d'éthylcellulose préalablement appliquée avec comme réticulant un composé d'aluminium de formule Al(NO₃)₃, Al₂(SO₄)₃ ou MeAl(SO₄)₂, Me désignant le potassium ou le sodium.

7. Compositions selon la revendication 1, caractérisées en ce que le revêtement d'éthylcellulose réticulée est obtenu par réaction de la couche d'éthylcellulose préalablement appliquée avec le nitrate Al(NO₃)₃ ou le sulfate Al₂(SO₄)₃.

8. Compositions selon la revendication 1, caractérisées en ce que le revêtement d'éthylcellulose réticulée est obtenu par réaction de la couche d'éthylcellulose préalablement appliquée avec comme réticulant un aldéhyde R¹CHO ou OHC-R²-CHO, R¹ désignant l'hydrogène, un alkyle en C₁-C₆ ou un phényle et R² une liaison directe ou un groupe -(CH₂-)ₙ-, n étant un entier de 1 à 4.

9. Compositions selon la revendication 1, caractérisées en ce que le revêtement d'éthylcellulose réticulée est obtenu par réaction de la couche d'éthylcellulose préalablement appliquée avec le formaldéhyde ou le glyoxal comme réticulant.

10. Compositions selon la revendication 1, caractérisées en ce que le revêtement d'éthylcellulose réticulée est obtenu par réaction de la couche d'éthylcellulose préalablement appliquée avec comme réticulant un dihalogénure d'acide dicarboxylique en C₂-C₈.

11. Compositions selon la revendication 1, caractérisées en ce que le revêtement d'éthylcellulose réticulée est obtenu par réaction de la couche d'éthylcellulose préalablement appliquée avec comme réticulant un dihalogéno-alcane en C₁-C₆.

12. Compositions selon la revendication 1, caractérisées en ce que le pigment est un pigment de dicéto-pyrrolopyrrole, d'isoindoline, d'isoindolinone ou de complexe de métal.

13. Compositions selon la revendication 1, caractérisées en ce que la proportion d'éthylcellulose est de 1 à 20% du poids du pigment.

14. Compositions selon la revendication 1, caractérisées en ce que le revêtement d'éthylcellulose réticulée est obtenu par réaction de la couche d'éthylcellulose préalablement appliquée avec un agent réticulant dans une proportion de 10 à 150 mole% par rapport à l'éthylcellulose.

15. Compositions selon la revendication 1, caractérisées en ce que la surface des particules du pigment comporte en outre un revêtement adhérent continu d'oxyde de silicium et/ou d'oxyde d'aluminium, fixé par polycondensation d'un silicate et/ou d'un aluminate avec les hydroxyles encore libres de l'éthylcellulose.

16. Matières organiques macromoléculaires contenant une composition selon la revendication 1.

17. Matières organiques macromoléculaires contenant une composition selon la revendication 15.
